# EUROPÄISCHE PATENTSCHRIFT

(11) **EP 0 556 469 B1**
(45) Veröffentlichungstag und Bekanntmachung des Hinweises auf die Patenterteilung: **18.09.1996**
(21) Anmeldenummer: 92120789.0
(22) Anmeldetag: 05.12.1992
(51) Int. Cl.: B65G 47/90, B25J 15/02

(54) **Greifer für einen Linearantrieb**
Gripper for a linear drive
Pince pour un actuateur linéaire

(30) Priorität: 15.02.1992 DE 4204545
(43) Veröffentlichungstag der Anmeldung: 25.08.1993
(73) Patentinhaber: Daimler-Benz Aerospace Aktiengesellschaft, D-80995 München (DE)
(72) Erfinder: Felkai, Roland, W-2800 Bremen 61 (DE)
(74) Vertreter: Hansmann, Dierk, Dipl.-Ing.

(56) Entgegenhaltungen:
- DE-A- 3 926 670
- US-A- 4 336 926

## Beschreibung

Die Erfindung betrifft eine Vorrichtung zum Ergreifen von Gegenständen, die mittels eines Linearantriebes zu transportieren sind, bei der mindestens zwei Greifbacken eines Greifers relativ zueinander positionierbar und auf einem Läufer aufeinander zu und voneinander weg beweglich geführt sind und bei der der Läufer von einem umlenkfähigen Verstellmittel positionierbar ist.

Derartige Linearantriebe werden verwendet, um ausgehend von einem Motor mit rotierenden Antriebselementen eine lineare Verstellung des Trägers durchführen zu können. Es ist beispielsweise bekannt, mit Hilfe eines Elektromotors eine Spindel anzutreiben, die in den mit einem entsprechenden Gewinde versehenen Träger eingreift und den Träger in Richtung einer Längsachse der Spindel positioniert. Bei den bekannten Linearantrieben sind die Elektromotoren häufig im Bereich eines Endes des Linearantriebes angeordnet und verringern hierdurch bei einer vorgegebenen Einbaulänge den verfügbaren Hubbereich. Darüber hinaus stehen die Elektromotoren häufig erheblich seitlich über den längsverschieblichen Träger hinaus, so daß nicht nur in Richtung der Längsbewegung des Trägers, sondern auch quer zu dieser Richtung ein erhebliches Einbauvolumen bereitgestellt werden muß. Dieses Einbauvolumen kann zwar bei Anwendungen im Bereich von Werkstatt- oder Montagehallen vorgesehen werden, bei Anwendungen im Bereich der Luft- und Raumfahrt sind die räumlichen Verhältnisse jedoch sehr beschränkt, so daß eine Verwendung der bekannten Linearantriebe mit erheblichen Schwierigkeiten verbunden ist und aufgrund der räumlichen Verhältnisse nur sehr eingeschränkt erfolgen kann.

Da pneumatische und hydraulische Antriebe wegen der Gefahr der Verschmutzung bei Raumfahrzeugen vermieden werden, sind für bekannte Greifer die Antriebe zur Verstellung der Greifbacken unmittelbar im Bereich der Greifbacken angeordnet. Hieraus resultiert zum einen ein vergleichsweise hohes Gewicht, das mit Hilfe des Linearantriebes zu bewegen und zu positionieren ist. Darüber hinaus ist ein zusätzliches Volumen zur Aufnahme des Motors erforderlich, das insbesondere bei beengten räumlichen Anwendungsverhältnissen zu erheblichen Einschränkungen führt.

Aus der DE-A-3 926 670 ist eine Handhabungseinrichtung bekannt, bei der ein Greifelement im Bereich eines Schlittens angeordnet ist, der in Längsrichtung eines Linearantriebes verfahrbar ist. Der Schlitten wird mit Hilfe von Seilzügen positioniert, die über Rollen geführt sind, die von Antriebsmotoren bewegt werden. Die Antriebsmotoren sind mit ihren Längsachsen quer zur Transportrichtung des Schlittens angeordnet.

Aus der US-A-4 336 926 ist eine weitere Handhabungseinrichtung bekannt, bei der im Bereich eines Greifers positionierbare Greifbacken angeordnet sind. Die Positionierung des Greifers erfolgt mit Hilfe eines Handhabungsarmes eines Roboters.

Aufgabe der vorliegenden Erfindung ist es, eine Vorrichtung der einleitend genannten Art derart zu konstruieren, daß der Greifer mit einem geringen Bauvolumen sowie einer geringen Masse versehen ist.

Diese Aufgabe wird erfindungsgemäß dadurch gelöst, daß daß die Greifbacken des Greifers im Bereich des Läufers verschieblich geführt und federnd verspannt sind und daß im Bereich der Greifbacken mindestens eine Umlenkung für das umlenkfähige Verstellmittel angeordnet ist, die in Abhängigkeit von einer Spannung des Verstellmittels eine Abstandsveränderung der Greifbacken vorgibt, daß das Verstellmittel von einem Verstellmotor beaufschlagt ist, daß der Verstellmotor zwischen zwei Gehäuseseiten einer Führungsschiene des Linearantriebes angeordnet ist und daß ein Antriebsmotor zur Positionierung des Läufers zwischen den Gehäuseseiten angeordnet ist und mit einem Antriebsrad für das Verstellmittel versehen ist.

Durch die Verwendung eines umlenkfähigen Verstellmittels ist es möglich, den Verstellantrieb zur Positionierung der Greifbacken räumlich getrennt vom Greifer anzuordnen. Das Verstellmittel kann im Bereich seiner wesentlichen Ausdehnung etwa parallel zum Verbindungsmittel zur Positionierung des Läufers geführt werden. Hierdurch werden separate Führungsmittel eingespart, die das erforderliche Bauvolumen vergrößern würden. Bei Verwendung einer Druckfeder zur federnden Verspannung der Greifbacken relativ zueinander kann die Umlenkung im Bereich des Trägers mechanisch sehr einfach konstruiert werden, so daß eine Verkürzung des Verstellmittels zu einer Verringerung des Abstandes der Greifbacken führt. Über das Verstellmittel werden die zur Positionsveränderung der Feder sowie die zur Gewährleistung eines sicheren Greifvorganges erforderlichen Kräfte übertragen.

Zur Ermöglichung einer einfachen Längenveränderung des Verstellmittels sowie einer einfachen Aufbringung von Verstellkräften wird vorgeschlagen, daß der Verstellmotor mit einer Wickeltrommel zur Auf- und Abwicklung eines seilartigen Verstellmittels verbunden ist.

Eine kompakte Ausführung sowie eine universelle Anwendbarkeit wird dadurch ermöglicht, daß der Verstellmotor als Elektromotor ausgebildet ist.

Die Kompaktheit der Anordnung wird darüber hinaus dadurch verbessert, daß der Verstellmotor und der Antriebsmotor zwischen zwei Gehäuseseiten einer Führungsschiene des Linearantriebes angeordnet sind.

Zur optimalen Nutzung des zur Verfügung stehenden Bauvolumens wird vorgeschlagen, daß die Wickeltrommel im Bereich einer Stirnseite angeordnet ist, die die eine Gehäuseseite abschließt. Es ist auch möglich, daß die Wickelrollen an einer längsverzahnten Keilwelle befestigt sind.

Eine ausgewogene Massenverteilung sowie eine Vermeidung von gegenseitigen Behinderungen wird dadurch gewährleistet, daß ein Antriebsmotor zur Positionierung des als Kopplung ausgebildeten Verbindungsmittels zur Positionierung des Läufers zwischen den Gehäuseteilen angeordnet ist und mit einem Antriebsrad in eine der Wickeltrommel abgewandte Richtung weist.

Eine zweckmäßige Kraftumsetzung im Bereich des Greifers durch Kraft-Weg-Umsetzungen erfolgt dadurch, daß im Bereich jeder der Greifbacken sowohl eine dem Läufer abgewandt angeordnete Außenumlenkung als auch eine dem Läufer zugewandte Innenumlenkung vorgesehen ist.

Eine leichtgängige Umlenkung des Verstellmittels wird dadurch ermöglicht, daß mindestens eine der Umlenkungen rollenartig ausgebildet ist.

Eine definierte Führung des Verstellmittels im Bereich des Läufers wird dadurch ermöglicht, daß benachbart zu den Innenumlenkungen im Bereich des Läufers zwei Läuferumlenkungen angeordnet sind.

Eine zweckmäßige Verlegung des Verstellmittels erfolgt dadurch, daß das Verstellmittel in einem sich zwischen den Greifbacken erstreckenden Innenraum von den Umlenkungen sich überkreuzend geführt ist.

Zur Ermöglichung einer unterschiedlichen Dimensionierung der Kopplung zur Verstellung des Läufers sowie des Verstellmittels zur Positionierung des Greifers wird vorgeschlagen, daß das Verstellmittel im Bereich von Enden der Gehäuseseiten von Umlenkmitteln geführt ist, die auch die Kopplung führen und das Verstellmittel im wesentlichen Bereich der Erstreckung der Gehäuseseiten im wesentlichen parallel zur Kopplung verläuft.

Zur Gewährleistung einer ausreichenden Spannung des Verstellmittels sowie zur Gewährleistung einer ausschließlich erforderlichen Übertragung von Zugkräften über das Verstellmittel wird vorgeschlagen, daß zur federnden Verspannung der Greifbacken eine zwischen den Greifbacken angeordnete Feder vorgesehen ist, die als eine Druckfeder ausgebildet ist.

In der Zeichnung sind Ausführungsbeispiele der Erfindung schematisch dargestellt. Es zeigen:
- Fig. 1: eine Prinzipdarstellung eines Linearantriebes, der mit zwei federnd verspannten Greifbacken versehen ist und bei dem sowohl ein Antriebsmotor zur Verstellung des Läufers als auch ein Verstellmotor zur Positionierung der Greifbacken im Bereich von Führungsschienen für den Läufer angeordnet sind **und**
- Fig. 2: eine vergrößerte Darstellung des Linearantriebes, bei dem der Läufer noch nicht mit Greifbacken versehen wurde.

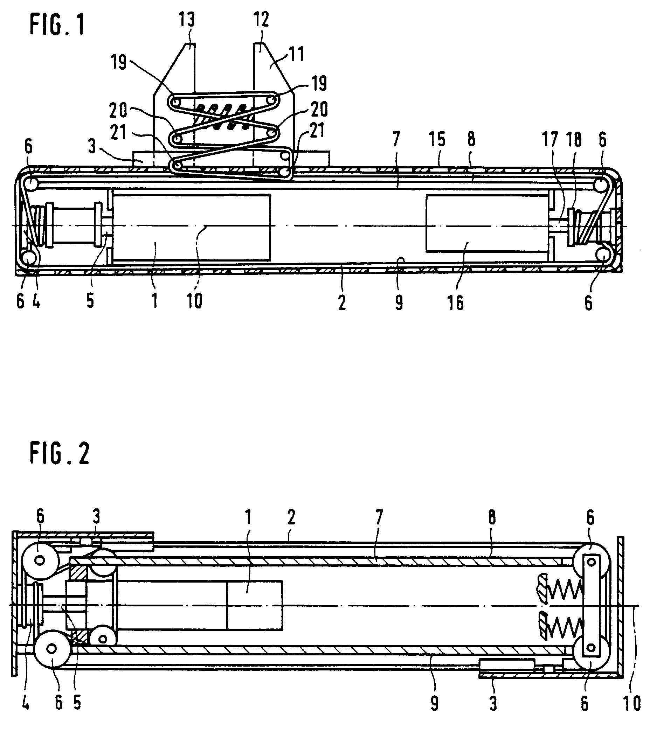

Ein Linearantrieb besteht entsprechend der Darstellung in Figur 1 und Figur 2 im wesentlichen aus einem Antriebsmotor (1), der als ein Elektromotor ausgebildet ist. Der Antriebsmotor (1) ist über eine Kopplung (2) mit einem Läufer (3) verbunden. Die Kopplung (2) ist als ein Seil ausgebildet, das mehrfach um ein Antriebsrad (4) des Antriebsmotors (1) gewickelt und ihre beiden Enden damit verbunden sind. Hierdurch wird auf zuverlässige Weise ein Verrutschen des Seiles im Bereich des Antriebsrades (4) vermieden. Das Antriebsrad (4) ist über eine Keilwelle (5) an den Antriebsmotor (1) angekoppelt. Zur Führung der Kopplung (2) sind in einem dem Antriebsmotor (1) abgewandten Bereich Umlenkmittel (6) angeordnet, die beispielsweise als Umlenkrollen ausgebildet sind. Darüber hinaus sind in einem dem Antriebsmotor (1) zugewandten Bereich weitere Umlenkmittel (6) vorgesehen. Bei den in den Zeichnungen dargestellten Ausführungsformen spannen die Umlenkmittel (6) im wesentlichen ein Rechteck auf. Die Umlenkmittel (6) sind im Gehäuse, auf dem Führungsschienen (7) befestigt sind, gelagert. Die Führungsschienen (7) sind an Gehäuseseiten (8,9) angebracht und innerhalb des Gehäuses ist der Antriebsmotor (1) angeordnet. Der Antriebsmotor (1) erstreckt sich hierdurch mit seiner Keilwelle (5) im wesentlichen in Richtung einer Längsachse (10) der Führungsschienen (7). Zur Gewährleistung einer ausreichenden Spannung sind im Bereich der Umlenkmittel (8) Vorspannfedern angeordnet.

Im Bereich des Läufers (3) ist ein Greifer (11) angeordnet, der im wesentlichen aus zwei Greifbacken (12,13) besteht, die in Richtung der Längsachse (10) beweglich im Bereich des Läufers (3) geführt sind. Die Greifbacken (12,13) sind von einer Feder (14) relativ zueinander verspannt. Insbesondere ist daran gedacht, die Feder (14) als eine Druckfeder auszubilden.

Bei der in Figur 1 dargestellten Ausführungsform ist ein umlenkfähiges Verstellmittel (15) getrennt von der Kopplung (2) vorgesehen, welches im wesentlichen Bereich seiner Ausdehnung entlang der Gehäuseseiten (8,9) parallel zur Kopplung (2) verlegt ist. Hierdurch ist es möglich, die Umlenkmittel (6) auch zur Führung des Verstellmittels (15) zu verwenden. Auch das Verstellmittel (15) kann beispielsweise als Seil ausgebildet sein. Zur Beaufschlagung des Verstellmittels (15) ist ein Verstellmotor (16) vorgesehen, der über eine Keilwelle (17) mit einer Wickeltrommel (18) verbunden ist. Mit Hilfe der Wickeltrommel (18) ist es in Abhängigkeit von der jeweiligen Drehrichtung möglich, entweder eine Verlängerung oder eine Verkürzung des Verstellmittels (15) vorzunehmen. Gegebenenfalls im Bereich des Greifers (11) erforderliche Kräfte werden ebenfalls vom Verstellmotor (16) erzeugt und über das Verstellmittel (15) übertragen.

Zur Führung des Verstellmittels (15) im Bereich des Greifers (11) sind die Greifbacken (12,13) im Bereich ihrer dem Läufer (3) abgewandten Ausdehnung mit Außenumlenkungen (19) versehen. Zusätzlich sind im Bereich der dem Läufer (3) zugewandten Ausdehnung der Greifbacken (12,13) Innenumlenkungen (20) angeordnet. Benachbart zu den Innenumlenkungen (20) weist der Läufer (3) Läuferumlenkungen (21) auf. Das in den Bereich des Läufers (3) geführte Verstellmittel (15) wird zunächst im Bereich der Läuferumlenkung (21) in eine quer zur Längsachse (10) orientierte Richtung umgeleitet. Über die Innenumlenkung (20) und die Außenumlenkung (19) erfolgt anschließend beispielsweise eine kreuzförmige Verspannung des Verstellmittels (15). Die Führung des Verstellmittels (15) im Bereich der Umlenkungen (19,20,21) ist derart abgestimmt, daß bei einer Verkürzung des Verstellmittels (15) mit Hilfe der Wickeltrommel (18) die Greifbacken (12,13) aufeinander zubewegt werden und durch eine Zugkraft des Verstellmittels (15) ein von den Greifbacken (12,13) erfaßter Gegenstand sicher gehaltert werden kann.

Bei der Ausführungsform gemäß Figur 2 sind entlang der Führungsschiene (7) zwei Läufer (3) angeordnet. Grundsätzlich ist jedoch die Verwendung eines der Läufer (3) ausreichend.

## Patentansprüche

1. Vorrichtung zum Ergreifen von Gegenständen, die mittels eines Linearantriebs zu transportieren sind, bei der mindestens zwei Greifbacken (12,13) eines Greifers (11) relativ zueinander positionierbar und auf einem Läufer (3) aufeinander zu und voneinander weg beweglich geführt sind und bei der der Läufer (3) von einem umlenkfähigen Verstellmittel (15) positionierbar ist, dadurch gekennzeichnet, daß die Greifbacken (12,13) des Greifers (11) im Bereich des Läufers (3) verschieblich geführt und federnd verspannt sind und daß im Bereich der Greifbacken (12,13) mindestens eine Umlenkung (19,20) für das umlenkfähige Verstellmittel (15) angeordnet ist, die in Abhängigkeit von einer Spannung des Verstellmittels (15) eine Abstandsveränderung der Greifbacken (12,13) vorgibt, daß das Verstellmittel (15) von einem Verstellmotor (16) beaufschlagt ist, daß der Verstellmotor (16) zwischen zwei Gehäuseseiten (8,9) einer Führungsschiene (7) des Linearantriebes angeordnet ist und daß ein Antriebsmotor (1) zur Positionierung des Läufers (3) zwischen den Gehäuseteilen (8,9) angeordnet ist und mit einem Antriebsrad (4) für das Verstellmittel (15) versehen ist.

2. Vorrichtung nach Anspruch 1, dadurch gekennzeichnet, daß der Verstellmotor (16) mit und der je Antriebsmotor (1) einer Wickeltrommel (4,18) zur Auf- und Abwicklung eines seilartigen Verstellmittels (15) verbunden sind.

3. Vorrichtung nach Anspruch 1 oder 2, dadurch gekennzeichnet, daß der Verstellmotor (16) und der Antriebsmotor (1) jeweils als Elektromotoren ausgebildet sind.

4. Vorrichtung nach einem der Ansprüche 2 oder 3, dadurch gekennzeichnet, daß jede Wickeltrommel (4,18) im Bereich einer Stirnseite angeordnet ist, die eine Gehäuseseite (8,9) abschließt.

5. Vorrichtung nach einem der Ansprüche 1 bis 4, dadurch gekennzeichnet, daß die Wickeltrommeln (4,18) an einer längsverzahnten Keilwelle (5,17) befestigt sind.

6. Vorrichtung nach einem der Ansprüche 1 bis 5, dadurch gekennzeichnet, daß im Bereich jeder der Greifbacken (12,13) sowohl eine dem Läufer (3) abgewandt angeordnete Außenumlenkung (19) als auch eine dem Läufer (3) zugewandte Innenumlenkung (20) vorgesehen ist.

7. Vorrichtung nach einem der Ansprüche 1 bis 6, dadurch gekennzeichnet, daß mindestens eine der Umlenkungen (19,20,21) rollenartig ausgebildet ist.

8. Vorrichtung nach einem der Ansprüche 1 bis 7, dadurch gekennzeichnet, daß benachbart zu den Innenumlenkungen (20) im Bereich des Läufers (3) zwei Läuferumlenkungen (21) angeordnet sind.

9. Vorrichtung nach einem der Ansprüche 1 bis 8, dadurch gekennzeichnet, daß das Verstellmittel (15) in einem sich zwischen den Greifbacken (12,13) erstreckenden Innenraum von den Umlenkungen (19,20) sich überkreuzend geführt ist.

10. Vorrichtung nach Anspruch 1, dadurch gekennzeichnet, daß das Verstellmittel (15) im Bereich von Enden der Gehäuseseiten (8,9) von Umlenkmitteln (6) geführt ist, die auch eine Kopplung (2) führen und das Verstellmittel (15) im wesentlichen Bereich der Erstreckung der Gehäuseseiten (8,9) im wesentlichen parallel zur Kopplung (2) verläuft.

11. Vorrichtung nach einem der Ansprüche 1 bis 10, dadurch gekennzeichnet, daß zur federnden Verspannung der Greifbacken (12,13) eine zwischen den Greifbacken (12,13) angeordnete Feder (14) vorgesehen ist, die als eine Druckfeder ausgebildet ist.

## Claims

1. A device for grasping objects, which are to be transported by means of a linear drive, in which at least two gripper jaws (12, 13) of a gripper device (11) are guided so that they can be positioned relative to one another and can be moved towards and away from one another on a runner (3) and in which the runner (3) can be positioned by deflectable adjusting means (15), characterised in that the gripper jaws (12, 13) of the gripper device (11) are displaceably guided in the region of the runner (3) and are resiliently braced, and in the region of the gripper jaws (12, 13) at least one deflection means (19, 20) is provided for the deflectable adjusting means (15) and as a function of tension in the adjusting means (15) brings about a change in the spacing of the gripper jaws (12, 13), the adjusting means (15) is acted upon by an adjusting motor (16), the adjusting motor (16) is arranged between two housing sides (8, 9) of a guide rail (7) of the linear drive, and a drive motor (1) for positioning the runner (3) is arranged between the housing sides (8, 9) and is provided with a drive gear (4) for the adjusting means (15).

2. A device according to claim 1, characterised in that the adjusting motor (16) and the drive motor (1) are each connected to a winding drum (4, 18) for winding and unwinding a cable-like adjusting means (15).

3. A device according to claim 1 or 2, characterised in that the adjusting motor (16) and the drive motor (1) are each constructed as electric motors.

4. A device according to one of claims 2 or 3, characterised in that each winding drum (4, 18) is arranged in the region of an end face which seals off a housing side (8, 9).

5. A device according to one of claims 1 to 4, characterised in that the winding drums (4, 18) are secured to a longitudinally toothed splined shaft (5, 17).

6. A device according to one of claims 1 to 5, characterised in that both outer deflection means (19) remote from the runner (3) and inner deflection means (20) facing the runner (3) are provided in the region of each of the gripper jaws (12, 13).

7. A device according to one of claims 1 to 6, characterised in that at least one of the deflection means (19, 20, 21) is constructed in the manner of a roller.

8. A device according to one of claims 1 to 7, characterised in that two runner deflection means (21) are arranged in the region of the runner (3) adjacent the inner deflection means (20).

9. A device according to one of claims 1 to 8, characterised in that the adjusting means (15) is guided in criss-cross fashion by the deflection means (19, 20) in an interior space extending between the gripper jaws (12, 13).

10. A device according to claim 1, characterised in that the adjusting means (15) is guided in the region of the ends of the housing sides (8, 9) by deflection means (6), which also guide a coupling (2), and the adjusting means (15) extend substantially parallel to the coupling (2) substantially in the region of the extension of the housing sides (8, 9).

11. A device according to one of claims 1 to 10, characterised in that a spring (14), which is constructed as a compression spring, is provided between the gripper jaws (12, 13) for the resilient bracing of said gripper jaws (12, 13).

## Revendications

1. Dispositif destiné à saisir des objets qui doivent être transportés au moyen d'un entraînement linéaire, dans lequel au moins deux mâchoires de prise (12, 13) d'une pince (11) peuvent être positionnées l'une par rapport à l'autre et sont rapprochées ou éloignées l'une de l'autre de façon mobile sur un curseur (3), et dans le cas duquel le curseur (3) peut être positionné par un élément de réglage (15) capable de changer de direction, **caractérisé en ce que** les mâchoires de prise (12, 13) de la pince (11) sont guidées par coulissement dans la zone du curseur (3) et fixées élastiquement et en ce que dans la zone des mâchoires de prise (12, 13) est disposé au moins un renvoi (19, 20) pour l'élément de réglage (15) capable de changer de direction qui, en fonction d'une tension de l'élément de réglage (15) opère un changement de la distance entre les mâchoires de prise (12, 13), en ce que l'élément de réglage (15) est entraîné par un servo-moteur (16), en ce que le servo-moteur (16) est disposé entre deux côtés de boîtier (8, 9) d'un rail de guidage (7) de l'entraînement linéaire et en ce que un moteur (1) destiné à positionner le curseur (3) est disposé entre les côtés de boîtier (8, 9) et est pourvu d'une roue d'entraînement (4) pour l'élément de réglage (15).

2. Dispositif selon la revendication 1, caractérisé en ce que le servo-moteur (16) et le moteur d'entraînement (1) sont tous deux connectés à un cylindre bobineur (4, 18) destiné à enrouler et à dérouler un élément de réglage (15) en forme de câble.

3. Dispositif selon l'une ou l'autre des revendications 1 et 2, caractérisé en ce que le servo-moteur (16) et le moteur d'entraînement (1) sont respectivement conçus comme des moteurs électriques.

4. Dispositif selon l'une ou l'autre des revendications 2 et 3, caractérisé en ce que chaque cylindre bobineur (4, 18) est disposé dans la zone d'une face frontale qui ferme un côté de boîtier (8, 9).

5. Dispositif selon l'une ou l'autre des revendications 1 à 4, caractérisé en ce que les cylindres bobineurs (4, 18) sont fixés à un arbre cannelé (5, 17) à endentement longitudinal.

6. Dispositif selon l'une ou l'autre des revendications 1 à 5, caractérisé en ce que dans la zone de chacune des mâchoires de prise (12, 13) est prévu tant un renvoi externe (19) opposé au curseur (3) qu'un renvoi interne (20) du côté du curseur (3).

7. Dispositif selon l'une ou l'autre des revendications 1 à 6, caractérisé en ce que au moins un des renvois (19, 20, 21) est conçu comme une roulette.

8. Dispositif selon l'une ou l'autre des revendications 1 à 7, caractérisé en ce que à côté des renvois internes (20) dans la zone du curseur (3) sont disposés deux renvois du curseur (21).

9. Dispositif selon l'une ou l'autre des revendications 1 à 8, caractérisé en ce que l'élément de réglage (15) est guidé par les renvois (19, 20) de façon croisée dans l'espace entre les mâchoires de prise (12, 13).

10. Dispositif selon la revendication 1, caractérisé en ce que l'élément de réglage (15) dans la zone des extrémités des côtés de boîtier (8, 9) sont guidés par des éléments de guidage (6) qui guident également un élément de couplage (2) et en ce que l'élément de réglage (15) s'étend dans la zone principale de l'extension des côtés de boîtier (8, 9) principalement parallèlement à l'élément de couplage (2).

11. Dispositif selon l'une ou l'autre des revendications 1 à 10, caractérisé en ce que afin de fixer élastiquement les mâchoires de prise (12, 13) est prévu un ressort (14) disposé entre les mâchoires de prise (12, 13) qui est conçu comme un ressort à pression.
